**Europäisches Patentamt**

**European Patent Office**

**Office européen des brevets**

(19)

(11) Veröffentlichungsnummer: **0 068 362**
A1

## (12) EUROPÄISCHE PATENTANMELDUNG

(21) Anmeldenummer: 82105376.6

(22) Anmeldetag: 18.06.82

(51) Int. Cl.³: **C 02 F 3/20**, C 02 F 3/16, C 02 F 3/18 // C02F3/30

(30) Priorität: 20.06.81 DE 3124213

(71) Anmelder: **Menzel GmbH. + Co., Hedelfinger Strasse 95, D-7000 Stuttgart 60 (DE)**

(43) Veröffentlichungstag der Anmeldung: 05.01.83 Patentblatt 83/1

(72) Erfinder: **Zink, Jürgen, Schilfweg 3, D-7000 Stuttgart 70 (DE)**

(74) Vertreter: **Grupe, Peter, Dipl.-Ing. et al, Patentanwaltsbüro Tiedtke-Bühling-Kinne-Grupe-Pellmann-Grams Bavariaring 4, D-8000 München 2 (DE)**

(84) Benannte Vertragsstaaten: **IT**

(54) **Verfahren und Vorrichtung zur Behandlung von Abwasser.**

(57) Dieses Verfahren und diese Vorrichtung dienen der Behandlung von Abwasser (4) bzw. Abwasserschlamm.

Zur Erzielung einer leistungsfähigen Abwasserbehandlung in einem einzigen Belebungsbecken (2) wird ein Begasungsteil (9) zur Aufbereitung des Abwassers (4) in Richtung zu dessen Oberfläche vertikal angehoben bzw. über diese hinausgehoben. Dazu wird ein bis dahin während einer Begasungsphase vorzugsweise feinstblasiger Gasaustritt aus dem Begasungsteil (9) weitgehend reduziert bzw. vollständig unterbunden.

TIEJTKE – BÜHLING – KINNE
GRUPE – PELLMANN – GRAMS

Patentanwälte und
Vertreter beim EPA
Dipl.-Ing. H. Tietke
Dipl.-Chem. G. Bühling
Dipl.-Ing. R. Kinne
Dipl.-Ing. P. Grupe
Dipl.-Ing. B. Pellmann
Dipl.-Ing. K. Grams

Bavariaring 4, Postfach 20 24 03
8000 München 2
Tel.: 0 89 - 53 96 53
Telex: 5-24 845 tipat
cable: Germaniapatent München

- 1 -

18. Juni 1982

EP 2244

Menzel GmbH & Co.

Stuttgart

## Verfahren und Vorrichtung zur Behandlung von Abwasser

Die Erfindung betrifft ein Verfahren zur Behandlung
von Abwasser mit biologischer Aufbereitung und Denitrifikation.

Bei Abwasserreinigungsanlagen ist es bekannt, das Abwasser in Belebungsbecken durch Luftsauerstoff- bzw.
Reinsauerstoffzufuhr zu begasen und zumeist in einem
weiterem Becken praktisch ohne Sauerstoffzufuhr einer
Denitrifikationsphase zu unterwerfen, so daß ein
Denitritfikationsprozeß stattfindet. Bei einer
Abwasserbegasung und Denitrifikation des Abwassers
in verschiddanen Becken ist die Gefahr einer Verstopfung der Gaszuführöffnungen durch Verunreinigungen
im Abwasser verhältnismäßig gering, da das Gas praktisch
ständig eingebracht wird. Allerdings ist ein solcher
Wasserbehandlungsprozeß in getrennten Becken verhältnismäßig aufwendig und setzt insbesondere aufgrund der
nicht unerheblichen Baumaßnahmen erhöhte Investitionskosten voraus und macht zudem aufwendigere Wartungsarbeiten erforderlich. Würde man die Belüftung des Abwassers intermittierend durchführen, so wäre eine
hinreichend zuverlässige Betriebsfunktion nicht gewährleistet, da aufgrund der Verstopfungsgefahr der
im Becken ortsfest installierten Gasaustrittsdüsen beim Abschalten der Gaszufuhr ein zu geringer Sauerstoffeintrag nach Abschluß der Denitrifikationsphase
kaum zu verhindern bzw. nur durch einen erheblich
gesteigerten Wartungsaufwand erreichbar wäre.

Der Erfindung liegt demgemäß die Aufgabe zugrunde,
ein Verfahren der eingangs beschriebenen Art so zu
verbessern, daß eine wechselnde Begasung des
Abwassers z. B. für eine Denitrifikation in einem
Becken möglich und eine verstopfungsfreie Begasungsfunktion mit feinblasigem Gaseintrag erreichbar ist.

Diese Aufgabe wird erfindungsgemäß dadurch gelöst,
daß ein Begasungsteil zur Aufbereitung des Abwassers
in Richtung zu dessen Oberfläche vertikal angehoben
bzw. über diese hinausgehoben wird und daß ein bis
dahin während einer Begasungsphase vorzugsweise
feinblasiger Gasaustritt aus dem Begasungsteil weitgehend reduziert bzw. vollständig unterbunden wird.

Ein wesentlicher Vorteil des erfindungsgemäßen Verfahrens
besteht darin, daß letzteres auch bevorzugt für
Sanierungsmaßnahmen bei bereits in Betrieb befindlichen
älteren, zumeist verhältnismäßig kostenaufwendig betreibbaren Abwasserreinigungsanlagen vorgesehen werden
kann, da die zu treffenden Maßnahmen zur Durchführung
des Verfahrens hinsichtlich der Vertikalverlagerung
des Begasungsteils für die erfindungsgemäße Belüftung
nicht sehr groß sind und bereits nach kurzer Zeit
aufgrund der mit dem Verfahren erzielten höheren
Leistungsfähigkeit und der damit verbundenen Kosteneinsparungen in vollem Umfang aufgefangen werden können.
So ist es beispielsweise möglich, den Begasungsteil
höhenverstellbar an einem über dem Belebungsbecken
angeordneten Brückenteil anzuordnen, wobei für die
Höhenverstellbarkeit ein Spindeltrieb od. dgl. vorgesehen werden kann.

Es ist aber auch möglich, das erfindungsgemäße Verfahren bei . neu zu projektierenden Abwasserreinigungsanlagen vorzusehen, wobei der Denitrifikationsprozeß des Abwassers baueinheitlich im Belebungsbecken integriert ist. Dabei ist aufgrund der erfindungsgemäßen Vertikalanhebung des Begasungsteils sichergestellt, daß während der Denitrifikationsphase keine Verstopfung der Poren am Begasungsteil erfolgen kann. Hierbei ist es insbesondere möglich, einen ausgesprochen feinstblasigen bzw. Feinstblasen erzeugenden Begasungsteil zu verwenden, wodurch ein hoher Sauerstoffeintrag und eine lange Verweilzeit im Abwasser erzielt werden kann, die insbesondere noch dadurch gesteigert werden kann, daß dem Begasungsteil eine im wesentlichen horizontale Strömung des Abwassers zugeordnet wird.

Bevorzugte Ausgestaltungen und vorteilhafte Weiterbildungen des Verfahrens sowie der Vorrichtung zur Durchführung des Verfahrens sind den Merkmalen der Unteransprüche, der nachfolgenden Beschreibung und der Zeichnung zu entnehmen, die in schematischer Darstellung bevorzugte Ausführungsformen als Beispiel zeigt. Es stellen dar:

Fig. 1 eine Draufsicht auf eine Abwasserreinigungsanlage

0068362

mit einem um eine vertikale Achse rotierenden,
höhenverstellbar angeordneten Begasungsaggregat,

Fig. 2    eine Abwasserreinigungsanlage gemäß Fig. 1,
jedoch mit einem um eine Horizontalachse
rotierenden, ebenfalls höhenverstellbaren Begasungsaggregat,

Fig. 3    eine Seitenansicht eines erfindungsgemäß höhenverstellbaren Begasungsaggregats mit einseitigem
Gasaustritt,

Fig. 4    eine Seitenansicht eines weiteren höhenverstellbaren Begasungsaggregats mit beidseitigem Gasaustritt,

Fig. 5    eine Draufsicht auf das vertikal verstellbare
Begasungsaggregat ähnlich der Fig. 1 in etwas
vergrößerter Darstellung mit einem etwa sternförmigen Abschervorrichtungsteil,

Fig. 6    eine Draufsicht auf ein vertikal verstellbares
Begasungsaggregat ähnlich der Fig. 5, jedoch mit
einem Parallelteile aufweisenden Abschervorrichtungsteil,

Fig. 7    eine Draufsicht auf ein vertikal verstellbares
Begasungsaggregat ähnlich der Fig. 5, jedoch
mit einem gitterförmigen Abschervorrichtungsteil,

Fig. 8    eine Seitenansicht eines höhenverstellbaren
Begasungsaggregats mit einem als Fallrohr ausgebildeten Schlammzuführrohr und

- 5 -                                    0068362

Fig. 9   eine Seitenansicht eines vertikal verstellbaren Begasungsaggregats gemäß Fig. 8, jedoch
         mit einem im wesentlichen horizontal zur Drehbelüfterebene gerichteten Schlammzuführrohr.

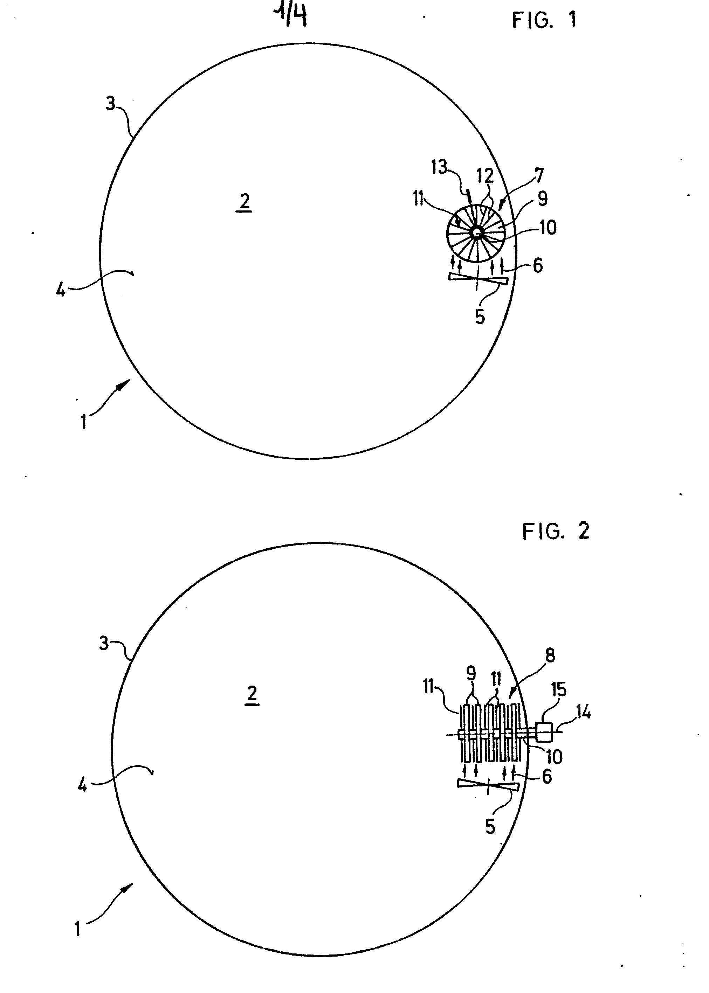

In den Figuren 1 und 2 ist eine Abwasserreinigungsanlage 1 dargestellt, die ein kreisförmiges Belebungsbecken 2 aufweist, das durch eine Außenwandung 3 begrenzt ist und Abwasser 4 beinhaltet. Im Belebungsbecken 2 ist neben der Außenwandung 3 ein Strömungserzeuger 5 angeordnet, der als um eine horizontale
Achse rotierender Propeller ausgebildet ist und das
Abwasser 4 in eine durch Pfeile verdeutlichte Strömung
6 versetzt.

Hinter dem Strömungserzeuger 5 ist ein Begasungsaggregat
7,8 im Belebungsbecken 2 angeordnet. Die Begasungsaggregate 7,8 sind als Drehbelüfter ausgeführt und besitzen scheibenförmige Begasungsteile 9, die an einer
rotierenden Hohlwelle 10 gelagert und mit dieser erfindungsgemäß zur Denitrifikation des Abwassers 4
vertikal höhenverstellbar bzw. über die Wasseroberfläche heraushebbar sind. Die Höhenverstellung bzw.
das Herausheben der Begasungsteile 9 erfolgt zweckmäßig über einen nicht dargestellten vertikalen Spindeltrieb od. dgl.. Durch die Hohlwelle 10 wird Luftsauerstoff zugeführt, der durch die Begasungsteile 9 ins
Abwasser 4 gelangt. Damit der Luftsauerstoff sehr
feinblasig ins Abwasser 4 eingebracht werden kann,
ist in einer Ebene parallel neben den Gasaustrittseiten
der Begasungsteile 9 jeweils ein Abschervorrichtungsteil 11 vorgesehen. Die Abschervorrichtungsteile 11
bewirken, daß die austretenden Gasblasen bereits in
ihrer ersten Entstehungsphase sehr fein vom Begasungsteil 9

abgeschert werden, so daß mit einfachen Mitteln ein
energiesparender und dennoch hochwirkungsvoller feinblasiger Luftsauerstoffeintrag in das Abwasser 4
möglich ist.

Anstelle des Begasungsteils 9 ist es auch möglich,
den Abschervorrichtungsteil 11 in Rotation zu versetzen.
Zudem können sowohl der Begasungsteil 9 als auch der
Abschervorrichtungsteil 11 rotieren, wobei die Drehrichtungen vorzugsweise einander entgegegesetzt verlaufen. Bei der Ausführungsform der Fig. 1 ist die
Hohlwelle 10 des Begasungsaggregats 7 vertikal angeordnet, so daß die Abscherbewegung des Begasungsteils
9 bzw. des Abschervorrichtungsteils 11 in einer
Horizontalebene um eine Vertikalachse drehend erfolgt.
Außerdem ist zu erkennen, daß der Abschervorrichtungsteil der Fig. 1 sternförmig bzw. speichenradförmig
angeordnete Abscherstreben 12 aufweist. Weiterhin
besitzt der Abschervorrichtungsteil 11, der an der
Hohlwelle 10 frei drehbar gelagert ist, ein Strömungsruder 13, das in das Abwasser 4 eingetaucht ist und
somit den Abschervorrichtungsteil 11 gegen ein unbeabsichtigtes Drehen stabilisiert.

Beim Ausführungsbeispiel der Fig. 2 ist die Hohlwelle
10 des Begasungsaggregats 8 um eine Horizontalachse 14
rotierend gelagert, so daß die Abscherbewegung zwischen
den Begasungsteilen 9 und den Abschervorrichtungsteilen
11 in einer Vertikalebene erfolgt. Es ist zu erkennen,
daß auf der Hohlwelle 10, die von einem Motor 15 getrieben wird, in Axialrichtung mehrere Begasungsteile
9 scheibenförmig parallel nebeneinander angeordnet sind.
Jeweils zwischen zwei Begasungsteilen 9 ist zudem je
ein Abschervorrichtungsteil 11 angeordnet. Zwei weitere

- 7 -

0068362

Abschervorrichtungsteile 11 bilden den Abschluß an
beiden äußeren Stirnseiten des Begasungsaggregats 8.

Die Strömung 6 des Abwassers 4 ist vorteilhaft rechtwinklig zur Austrittrichtung der Gasblasen aus den
Begasungsteilen 9 und im wesentlichen parallel zu
deren Ebene so-wie parallel zur Ebene der Abschervorrichtungsteile 11 gerichtet. Da der Strömungserzeuger 5 vorteilhaft um eine horizontale Achse
rotiert, erfolgt der parallel zum Abschervorrichtungsteil 11 gerichtete Strömungsverlauf im wesentlichen
auch in horizontaler Richtung, wodurch stets weitgehend gleichbleibende bzw. ausgeglichene Verhältnisse
gegeben sind. Bei den vorliegenden Ausführungsbeispielen ist der Strömungserzeuger 5 den Begasungsaggregaten 7,8 vorgelagert, so daß letztere sich
hinter der Druckseite des Strömungserzeugers 5 befinden. Es liegt aber auch im Rahmen der Erfindung,
den Strömungserzeuger 5 in Strömungsrichtung hinter
dem Begasungsaggregat 7,8 anzuordnen, so daß letzteres
vor der Saugseite des Strömungserzeugers 5 liegt.
Der Abstand zwischen dem Strömungserzeuger 5 und dem
Begasungsaggregat 7,8 kann zweckmäßig entsprechend
den jeweiligen Erfordernissen veränderbar bzw. anpaßbar
sein, wobei es günstig ist, das Begasungsaggregat 7,8
im wesentlichen im Bereich der höchsten Strömungsgeschwindigkeit des Abwassers 4 vorzusehen. Die Teile
können somit eventuell ganz dicht hintereinander
liegen oder auch bei entsprechender Strömungsführung
einen größeren Abstand zueinander haben. Zur Erzielung
einer hohen Leistungsfähigkeit befindet sich der
Strömungserzeuger 5 im wesentlichen in gleicher Ebene
mit dem Belüfteraggregat 7,8.

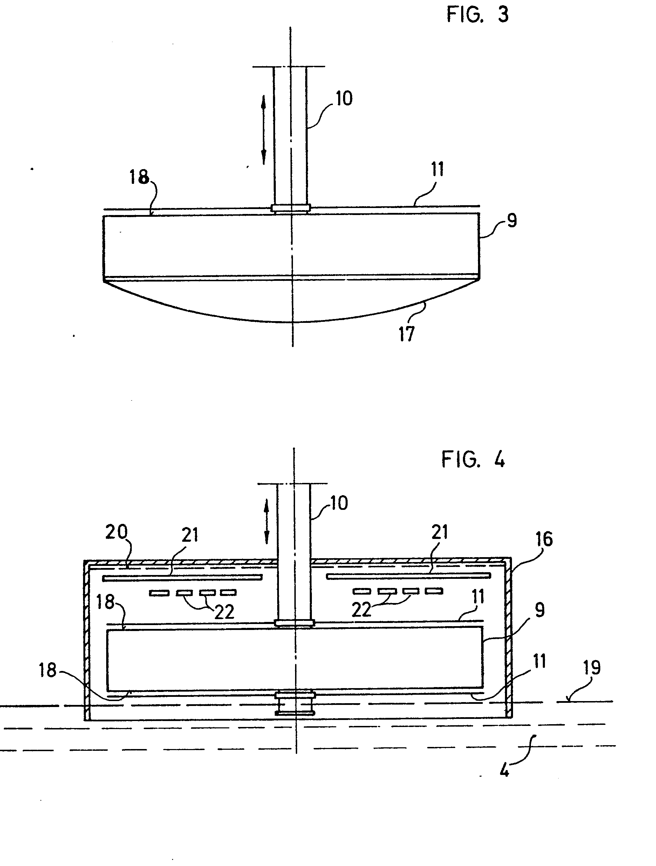

Wie bereits erwähnt, sind die Begasungsaggregate 7,8
erfindungsgemäß so ausgeführt, daß zumindest der
Begasungsteil 9 im Abwasser 4 höhenverstellbar ist.
Dabei ist es vorteilhaft, während einer Denitrifikationsphase des Abwassers 4 den Begasungsteil 9
in Richtung zur Wasseroberfläche so weit anzuheben,
daß er dicht unter der Wasseroberfläche verbleibt,
wobei der Gasblasenaustritt auf eine Verstopfung
verhinderndes Minimum reduziert wird. Es liegt im
Rahmen der Erfindung, den Begasungsteil 9 auch ganz
aus dem Abwasser 4 über die Wasseroberfläche herauszuheben und die Gaszufuhr völlig abzuschalten.
Damit ist in einem einzigen Belebungsbecken 2 sowohl
eine Belüftung des Abwassers 4 für den Belebtschlamm
zur Aktivierung der Mikroorganismen während der
mikrobiellen Nitrifikation als auch eine Unterbrechung
dieser Phase für eine gezielte Denitrifikation über
einen vorgegebenen bzw. steuerbaren Zeitraum möglich.
Wird der Begasungsteil 9 für die Denitrifikationsphase
dicht unter der Wasseroberfläche gehalten, so ist gewährleistet, daß auch bei niedrigen Außentemperaturen
im Winter keine Vereisung am Begasungsteil 9 auftritt,
wobei durch die minimale Gaszuführung ein Verstopfen der
Gasaustrittsporen unterbunden ist. Wird der Begasungsteil 9 bis über die Wasseroberfläche angehoben, so
ist es vorteilhaft, eine Abdeckhaube 16 (Fig. 4) vorzusehen, die den Begasungsteil 9 nach außen abschirmt
und mit ihrem unteren Randbereich vorteilhaft etwas
in das Abwasser 4 eintaucht. Hierbei kann der Begasungsteil 9 sowohl bezüglich der Gasströmung als auch hinsichtlich seiner Rotation völlig stillgesetzt werden.

Bei dem erfindungsgemäß intermittierenden Begasungsverfahren kann es zweckmäßig sein, den Begasungsteil 9 etwa im oberen Zweidrittel-Bereich, vorzugsweise
in der oberen Hälfte des Abwassers 4 zu betreiben,
so daß aufgrund der geringen Eintauchtiefe nur ein
kleiner Widerstand zu überwinden ist, so daß auch
nur eine verhältnismäßig geringe Betriebsleistung
erforderlich ist. Die feinstblasige Belüftung ist
hier in jedem Falle gewährleistet. Darüber hinaus
ist es bei Abwasserreinigungsanlagen im Rahmen der
Erfindung aber auch möglich, den Begasungsteil 9
unten dicht über dem Boden des Belebungsbeckens 2
zu betreiben, wodurch erreicht wird, daß die Verweilzeit der feinen Gasblasen im Abwasser 4 ausgesprochen lang ist und keine Aufwirbelung an der Wasseroberfläche auftritt und etwaige Geruchsbeeinträchtigungen der Umgebungsluft weitgehend vermieden sind.
Zur individuellen Höheneinstellung des Begasungsteils 9 während der Sauerstoffeinbringungsphase kann
vorzugsweise der für das erfindungsgemäße Anheben
des Begasungsteils 9 für die Denitrifikation vorgesehene Vertikalspindeltrieb herangezogen werden, so
daß mit einer einzigen Baueinheit vielfältige Einstellmöglichkeiten durchführbar sind.

Der Fig. 3 ist zu entnehmen, daß der um die Achse
rotierende Begasungsteil 9 an seiner dem Abschervorrichtungsteil 11 gegenüberliegenden Seite eine Verteilerkappe 17 besitzt, die das durch die Hohlwelle 10
zugeführte Belüftungsgas gleichmäßig durch den Begasungsteil 9 verteilt. Der Abschervorrichtungsteil 11
ist in geringem Abstand über der oberen Gasaustrittsseite 18 des Begasungsteils 9 an der Hohlwelle 10 frei
drehend gelagert. Außerdem ist der Abschervorrichtungsteil 11 vorteilhaft in Axialrichtung an der Hohlwelle
10 im Bereich von 0 bis etwa 100 mm, vorzugsweise

O bis 10 mm einstellbar, so daß der Abstand des Abschervorrichtungsteils 11 zur Gasaustrittsseite 18 in
diesem Bereich entsprechend den jeweiligen Erfordernissen regelbar ist. Der Doppelpfeil neben der Hohlwelle 10 soll verdeutlichen, daß der Begasungsteil 9
im Abwasser 4 höhenverstellbar ist und zur Denitrifikation bis über die Wasseroberfläche herausgehoben
werden kann.

Die Fig. 4 zeigt, daß der Begasungsteil 9 neben der
oberen und der unteren Gasaustrittseite 18 jeweils
einen Abschervorrichtungsteil 11 aufweist, die beide
unabhängig voneinander an der Hohlwelle 10 frei drehend
und auf Abstand verstellbar gelagert sind. Der Begasungsteil 9 ist beim vorliegenden Ausführungsbeispiel
für eine Denitrifikation des Abwassers 4 so weit nach
oben angehoben worden, daß er sich dicht über der
Oberfläche 19 des Abwassers 4 befindet. Dabei ist der
Begasungsteil 9 von einer Abdeckhaube 16 überdeckt,
die mit ihrem unteren Rand etwas in das Abwasser 4
eintaucht. Über der Oberwandung der Abdeckhaube 16 ist
eine Wärmeisolierung 20 vorgesehen. Darunter ist ein
Heizelement 21 angeordnet, das bei Winterbetrieb eingeschaltet werden kann und ein Einfrieren verhindert.
Unter dem Heizelement 21 befindet sich ein brausenähnlicher Berieselungsteil 22, mittels dem Wasser auf
den Begasungsteil 9 gesprüht werden kann, so daß hierdurch ebenfalls eine Vereisung verhindert werden kann.
Das Heizelement 21 und der Berieselungsteil 22 können
zusammen oder auch unabhängig voneinander betrieben
werden.

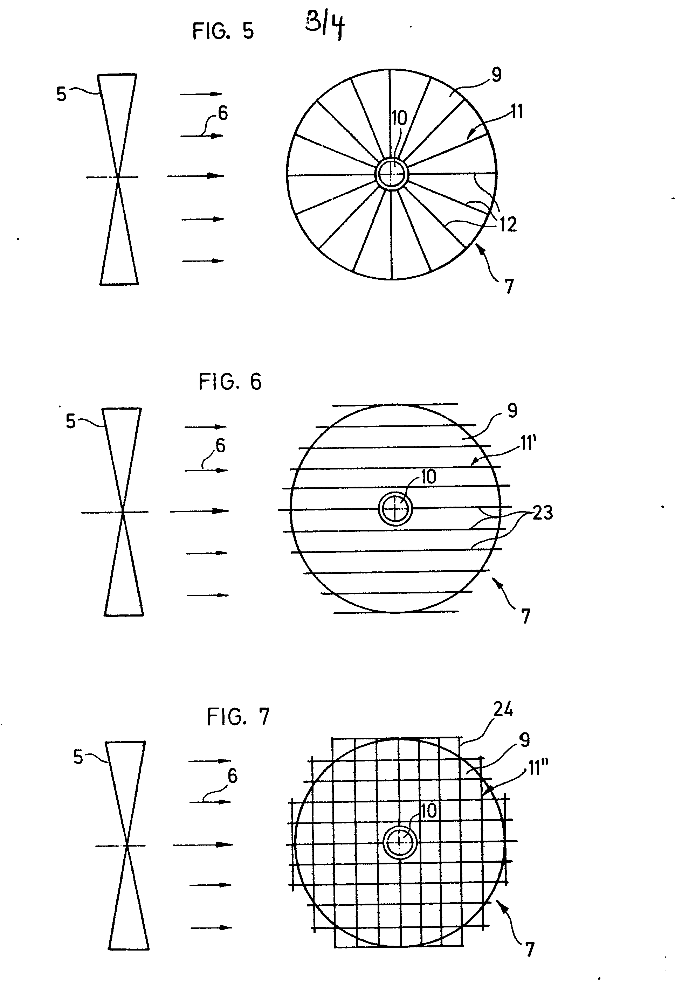

Die Figuren 5,6 und 7 zeigen in etwas vergrößerter
Darstellung eine schematische Anordnung des

0068362

Strömungserzeugers 5 und des Begasungsteils 9 mit
dem Abschervorrichtungsteil 11. Dabei wird die
Strömung 6 von der Druckseite des propeller-artigen
Strömungserzeugers 5 gegen den Begasungsteil 9 gedrückt. Der Abschervorrichtungsteil 11 in Fig. 5 ist
sternförmig ausgeführt und besitzt ähnlich einem
Speichenrad abstrebende Abscherstreben 12. Bei der
Ausführungsform der Fig. 6 weist der Abschervorrichtungsteil 11' Linearstreben 23 auf, die parallel
nebeneinander in Richtung der Strömung 6 angeordnet
sind. Das Ausführungsbeispiel gemäß der Fig. 7 zeigt
einen über dem Begasungsteil 9 angeordneten Abschervorrichtungsteil 11'', der als Gitter 24 ausgebildet
ist, wobei die Gitteröffnungen je nach Erfordernis
groß oder auch engmaschig sein können.

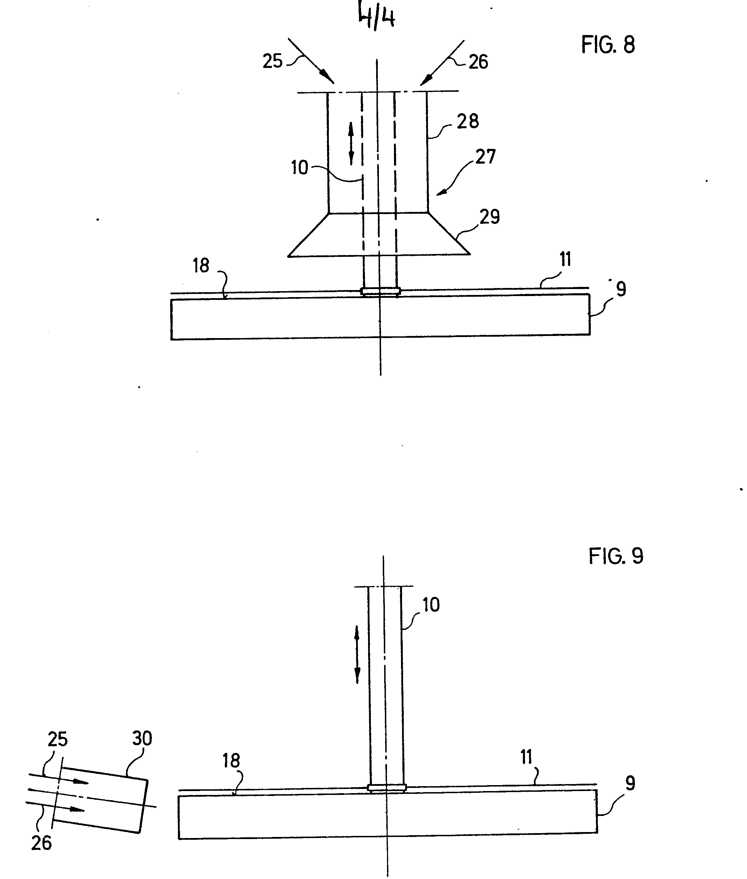

Die Figuren 8 und 9 offenbaren, daß insbesondere beim
erfindungsgemäßen intermittierenden Behandlungsverfahren des Abwassers 4 sowohl Zulaufabwasser mit Zulaufschlamm 25 als auch Rücklaufschlamm 26 so in das
Belebungsbecken 2 eingebracht werden können, daß der
Eintrag dicht neben dem Begasungsteil 9 erfolgt. Bei
der Ausführung gemäß der Fig. 8 ist dazu das den Zulaufschlamm 25 und den Rücklaufschlamm 26 einbringende
Schlammzuführrohr 27 als im wesentlichen vertikales
Fallrohr 28 ausgeführt, das die Hohlwelle 10 koaxial
umgibt und einen trichterförmig vergrößerten Auslaufteil 29 besitzt, so daß die Schlämme optimal verteilt werden. Beim Ausführungsbeispiel der Fig. 9
ist das Schlammzuführrohr 30 mit seiner Mündung dicht
neben dem Außenumfang des als Drehbelüfter ausgeführten
Begasungsteils 9 angeordnet. Dadurch werden der Zulaufschlamm 25 und/oder der Rücklaufschlamm 26 im wesentlichen
horizontal in der Ebene des scheibenförmigen Begasungsteils 9 in das Abwasser 4 eingebracht. Durch die Einbringung der Schlämme unmittelbar neben dem Begasungsteil 9 sind optimale Bedingungen in der Zone der höchsten Sauerstoffsättigung und gleichzeitig größten Turbulenz für einen Stoffaustausch der Bakterien gegeben. Es liegt somit zum einen eine große Sauerstoffzufuhr für die Bakterien vor und zum anderen ist durch die unmittelbar direkte Abwasserzufuhr dessen Substrat für die Bakterien ebenfalls direkt vorgegeben. Dabei besteht die vorteilhafte Möglichkeit, durch eine gleichzeitig unmittelbare Einleitung des Rücklaufschlamms 26 die Menge der Bakterien im Sauerstoff- und Turbulenzaktivbereich zu vergrößern.

# Tiedtke - Bühling - Kinne
# Grupe - Pellmann - Grams

Patentanwälte und
Vertreter beim EPA
Dipl.-Ing. H. Tiedtke
Dipl.-Chem. G. Bühling
Dipl.-Ing. R. Kinne
Dipl.-Ing. P. Grupe
Dipl.-Ing. B. Pellmann
Dipl.-Ing. K. Grams

**Bavariaring 4, Postfach 20 24 03**
**8000 München 2**
Tel.: 0 89 - 53 96 53
Telex: 5-24 845 tipat
cable: Germaniapatent München

18. Juni 1982
EP 2244

- 13 -

0068362

## P a t e n t a n s p r ü c h e

1. Verfahren zur Behandlung von Abwasser bzw. Abwasserschlamm, dadurch gekennzeichnet, daß ein Begasungsteil
(9) zur Aufbereitung des Abwassers (4) in Richtung zu
dessen Oberfläche (19) vertikal angehoben bzw. über diese
hinausgehoben wird und daß ein bis dahin während einer
Begasungsphase vorzugsweise feinstblasiger Gasaustritt
aus dem Begasungsteil (9) weitgehend reduziert bzw. vollständig unterbunden wird.

2. Verfahren nach vorstehendem Anspruch, dadurch gekennzeichnet, daß eine Strömung (6) des Abwassers (4)
quer zur Austrittsrichtung der Gasblasen aus dem Begasungsteil (9) und im wesentlichen parallel zu dessen
Ebene gerichtet ist.

3. Verfahren nach einem der vorstehenden Ansprüche,
dadurch gekennzeichnet, daß die zur Ebene des Begasungsteils (9) parallele Strömung (6) im wesentlichen
horizontal erfolgt.

4. Verfahren nach einem der vorstehenden Ansprüche,
dadurch gekennzeichnet, daß Zulaufabwasser mit Zulaufschlamm (25) und/oder Rücklaufschlamm (26) nahe bzw.

dicht neben dem Begasungsteil (9) in ein Belebungsbecken (2) eingebracht wird.

5. Verfahren nach einem der vorstehenden Ansprüche,
dadurch gekennzeichnet, daß der Zulaufschlamm (25) und/
oder der Rücklaufschlamm (26) im wesentlichen in
Richtung der Höhenverstellung des Begasungsteils (9)
in das Abwasser (4) des Belebungsbeckens (2) eingetragen wird.

6. Verfahren nach einem der vorstehenden Ansprüche,
dadurch gekennzeichnet, daß der Zulaufschlamm (25)
und/oder der Rücklaufschlamm (26) im wesentlichen
parallel zur Strömung (6) des Abwassers (4) horizontal
eingetragen wird.

7. Verfahren nach einem der vorstehenden Ansprüche,
dadurch gekennzeichnet, daß über einen Abschervorrichtungsteil (11) eine mindestens teilweise Abscherung der Gasblasen beim Austritt aus dem Begasungsteil (9) erfolgt.

8. Verfahren nach einem der vorstehenden Ansprüche,
dadurch gekennzeichnet, daß zur Abscherung der Gasblasen
der Begasungsteil (9) und/oder der Abschervorrichtungsteil (11) im wesentlichen quer zur Gasaustrittsrichtung
gegeneinander bewegt werden.

9. Verfahren nach einem der vorstehenden Ansprüche,
dadurch gekennzeichnet, daß die Abscherbewegung des Begasungsteils (9) und/oder des Abschervorrichtungsteils
(11) im wesentlichen kreisbahnförmig verläuft.

10. Verfahren nach einem der vorstehenden Ansprüche,

0068362

dadurch gekennzeichnet, daß die Abscherbewegung des Begasungsteils (9) und/oder des Abschervorrichtungsteils
(11) um eine Vertikalachse im wesentlichen in einer
Horizontalebene erfolgt.

11. Verfahren nach einem der vorstehenden Ansprüche,
dadurch gekennzeichnet, daß die Abscherbewegung des
Begasungsteils (9) und/oder des Abschervorrichtungsteils (11) um eine Horizontalachse (14) im wesentlichen
in einer Vertikalebene erfolgt.

12. Verfahren nach einem der vorstehenden Ansprüche,
dadurch gekennzeichnet, daß eine variable Abscherintensität der Gasblasen vom Begasungsteil (9) durch
eine Abstandsänderung zum Abschervorrichtungsteil (11)
einstellbar ist.

13. Vorrichtung zur Durchführung des Verfahrens, dadurch gekennzeichnet, daß der Begasungsteil (9) an
einem Vertikalspindeltrieb höhenverstellbar gelagert
ist.

14. Vorrichtung nach vorstehendem Anspruch, dadurch
gekennzeichnet, daß der Begasungsteil (9) im oberen
Zweidrittel-Bereich des Abwasserstandes vorzugsweise
in der oberen Hälfte des Abwassers (4) in Betriebsfunktion angeordnet ist.

15. Vorrichtung nach einem der vorstehenden Ansprüche,
dadurch gekennzeichnet, daß der Begasungsteil (9) unmittelbar unter der Oberfläche (19) des Abwassers (4)
in Betriebsfunktion angeordnet ist.

16. Vorrichtung nach einem der vorstehenden Ansprüche, dadurch gekennzeichnet, daß dem Begasungsteil (9)
ein vorzugsweise als Propeller ausgebildeter Strömungserzeuger (5) im Abwasser (4) zugeordnet ist.

17. Vorrichtung nach einem der vorstehenden Ansprüche,
dadurch gekennzeichnet, daß der Strömungserzeuger (5)
dem Begasungsteil (9) in Strömungsrichtung gesehen vorgelagert ist.

18. Vorrichtung nach einem der vorstehenden Ansprüche,
dadurch gekennzeichnet, daß der Begasungsteil (9) vor
der Saugseite des Strömungserzeugers (5) im Abwasser (4)
angeordnet ist.

19. Vorrichtung nach einem der vorstehenden Ansprüche,
dadurch gekennzeichnet, daß der Begasungsteil (9) im
Bereich der höchsten Strömungsgeschwindigkeit des Abwassers (4) dem Strömungserzeuger (5) zugeordnet ist.

20. Vorrichtung nach einem der vorstehenden Ansprüche,
dadurch gekennzeichnet, daß der Begasungsteil (9) im
wesentlichen in einer Ebene mit dem Strömungserzeuger
(5) angeordnet ist.

21. Vorrichtung nach einem der vorstehenden Ansprüche,
dadurch gekennzeichnet, daß dem Begasungsaggregat (7,8)
ein nahe dem Begasungsteil (9) mündendes Schlammzuführrohr (27,30) zugeordnet ist.

22. Vorrichtung nach einem der vorstehenden Ansprüche,
dadurch gekennzeichnet, daß das Schlammzuführrohr (27)
als mit einer Hohlwelle des Begasungsteils (9) koaxiales
Fallrohr (28) ausgebildet ist.

23. Vorrichtung nach einem der vorstehenden Ansprüche, dadurch gekennzeichnet, daß der Abschervorrichtungsteil in einer Ebene parallel neben einer Gasaustrittsseite (18) des Begasungsteils (9) angeordnet ist.

24. Vorrichtung nach einem der vorstehenden Ansprüche, dadurch gekennzeichnet, daß der Begasungsteil (9) im wesentlichen als Scheibe ausgeführt und mit der gaszuführenden angetriebenen Hohlwelle (10) als rotierender Drehbelüfter ausgebildet ist.

25. Vorrichtung nach einem der vorstehenden Ansprüche, dadurch gekennzeichnet, daß der Abschervorrichtungsteil (11) an der Hohlwelle (10) gelagert ist.

26. Vorrichtung nach einem der vorstehenden Ansprüche, dadurch gekennzeichnet, daß der Abschervorrichtungsteil (11) an der Hohlwelle (10)in deren Axialrichtung zur Gasaustrittsseite (18) des Begasungsteils (9) im Abstand von 0 bis 100 mm, vorzugsweise 0 bis 10 mm, einstellbar ist.

27. Vorrichtung nach einem der vorstehenden Ansprüche, dadurch gekennzeichnet, daß der Begasungsteil (9) an einer dem Abschervorrichtungsteil (11) abgewandten Seite eine Verteilerkappe (17) aufweist.

28. Vorrichtung nach einem der vorstehenden Ansprüche, dadurch gekennzeichnet, daß der Begasungsteil (9) zwei Gasaustrittsseiten (18) aufweist und daß neben beiden Gasaustrittsseiten (18) je ein Abschervorrichtungsteil (11) angeordnet ist.

29. Vorrichtung nach einem der vorstehenden Ansprüche, dadurch gekennzeichnet, daß auf der Hohlwelle (10) in deren Axialrichtung mehrere Begasungsteile (9) scheibenförmig parallel nebeneinander angeordnet sind und daß zwischen zwei Begasungsteilen (9) mindestens je ein Abschervorrichtungsteil (11) angeordnet ist.

30. Vorrichtung nach einem der vorstehenden Ansprüche, dadurch gekennzeichnet, daß der Abschervorrichtungsteil (11) im wesentlichen sternförmig angeordnete Abscherstreben (12) aufweist.

31. Vorrichtung nach einem der vorstehenden Ansprüche, dadurch gekennzeichnet, daß der Abschervorrichtungsteil (11') im wesentlichen parallel nebeneinander angeordnete Linearstreben (23) aufweist.

32. Vorrichtung nach einem der vorstehenden Ansprüche, dadurch gekennzeichnet, daß der Abschervorrichtungsteil (11'') als Gitter (24) ausgeführt ist.

33. Vorrichtung nach einem der vorstehenden Ansprüche, dadurch gekennzeichnet, daß dem an der Hohlwelle (10) frei drehbar gelagerten Abschervorrichtungsteil (11) ein Strömungsruder (13) zugeordnet ist.

0068362

FIG. 1

FIG. 2

FIG. 3

FIG. 4

0068362

FIG. 5    3/4

FIG. 6

FIG. 7

4/4

FIG. 8

25    26

28

27

10    29

18    11    9

FIG. 9

10

25    30

18    11    9

26

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-A-2 909 724 (STEINMANN + ITTIG) <br> * Seiten 1,2, Ansprüche 1-6; Seite 6, letzter Absatz - Seite 7, Zeile 11; Seite 11, Zeile 10 - Seite 13, Absatz 1 * | 1-3 | C 02 F 3/20 <br> C 02 F 3/16 <br> C 02 F 3/18 // <br> C 02 F 3/30 |
| | --- | | |
| Y | CH-A- 613 383 (RECENTEC) <br> * Seite 2, Ansprüche 1,4,6,7,16 * | 1,13 | |
| | --- | | |
| P,X | EP-A-0 047 921 (MENZEL) <br><br> * Seite 6, Absatz 2; Seite 8, Zeile 12 - Seite 10, Zeile 22 * | 1-3,16 -20 | |
| | --- | | |
| P,X | US-A-4 294 696 (WATER POLLUTION CONTROL CORP.) <br> * Spalte 2, Zeilen 15-19, 27-31; Spalte 5, Zeilen 35-62; Spalten 7,8, Ansprüche 1,8 * | 1,14, 15 | |
| | --- | | **RECHERCHIERTE SACHGEBIETE (Int. Cl. ³)** |
| A | CH-A- 379 445 (ESCHER WYSS) <br><br> * Seite 3, Zeile 75 - Seite 4, Zeile 16 * | 4,7,10 ,14,15 ,21,24 | C 02 F |
| | --- | | |
| A | DE-B 1 203 189 (A. RIEBER) <br> * Spalte 2, Zeile 20 - Spalte 3, Zeile 3 * | 5,22 | |
| | --- <br> -/- | | |

Der vorliegende Recherchenbericht wurde für alle Patentansprüche erstellt.

| Recherchenort | Abschlußdatum der Recherche | Prüfer |
|---|---|---|
| DEN HAAG | 13-09-1982 | TEPLY J. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPA Form 1503. 03.82

Europäisches
Patentamt

**EUROPÄISCHER RECHERCHENBERICHT**

0068362
Nummer der Anmeldung

EP 82 10 5376

Seite 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | US-A-3 630 498 (NAMCO)<br><br>* Spalte 4, Zeile 67 - Spalte 5, Zeile 36 *<br><br>--- | 4,7-10 ,23,28 ,32 | |
| A | DE-A-2 120 362 (UNION CARBIDE)<br><br>* Seite 10, Zeile 11 - Seite 18 *<br><br>--- | 7-10, 23,28, 30 | |
| A | CH-A- 290 287 (KERAG)<br>* Figur 7 *<br><br>--- | 11 | |
| A | DE-A-1 784 501 (H. DOMZIG)<br><br>----- | | |

RECHERCHIERTE
SACHGEBIETE (Int. Cl. ³)

Der vorliegende Recherchenbericht wurde für alle Patentansprüche erstellt.

| Recherchenort<br>DEN HAAG | Abschlußdatum der Recherche<br>13-09-1982 | Prüfer<br>TEPLY J. |
|---|---|---|